# FASCICULE DE BREVET EUROPEEN

(11) **EP 0 577 735 B1**
(45) Date de publication et mention de la délivrance du brevet: **17.11.1994**
(21) Numéro de dépôt: 92909959.6
(22) Date de dépôt: 29.04.1992
(51) Int. Cl.: C04B 35/65, C04B 35/66, F27D 1/16, B05D 1/02

(54) **MELANGE DE SUBSTANCES CHIMIQUES POUR LA FORMATION D'UNE COMPOSITION REFRACTAIRE, PROCEDE DE PREPARATION ET PROCEDE D'UTILISATION DE CETTE COMPOSITION**
MISCHUNG VON CHEMISCHEN SUBSTANZEN ZUR HERSTELLUNG EINER FEUERFESTEN ZUSAMMENSETZUNG, VERFAHREN ZUR HERSTELLUNG DIESER ZUSAMMENSETZUNG UND VERFAHREN ZUR IHRER ANWENDUNG
MIXTURE OF CHEMICAL SUBSTANCES FOR PRODUCING A REFRACTORY COMPOSITION, METHOD FOR THE PREPARATION OF SAID COMPOSITION AND USE THEREOF

(30) Priorité: 07.05.1991 BE 9100427
(43) Date de publication de la demande: 12.01.1994
(73) Titulaire: FIB-SERVICES, B-7300 Boussu (BE)
(72) Inventeur: DI LORETO, Oswaldo, B-7300 Boussu (BE)
(74) Mandataire: Callewaert, Jean
(86) Numéro de dépôt international: BE9200012
(87) Numéro de publication internationale: WO9219566

(56) Documents cités:
- EP-A- 0 244 133
- EP-A- 0 405 556
- EP-A- 0 426 848
- BE-A- 871 496
- BE-A- 894 731
- BE-A- 894 732
- GB-A- 2 213 812
- US-A- 3 082 104
- US-A- 4 126 654
- US-A- 4 943 544
- WORLD PATENTS INDEX LATEST Week 8516, Derwent Publications Ltd., London, GB; AN 85-095303 & JP, A, 60 042 281 (KUROSAKI REFRACT.KK)

## Description

La présente invention est relative à un mélange de substances chimiques destiné à la formation d'une composition réfractaire qui est notamment destinée à la fabrication de pièces réfractaires de toute forme, à la formation de couches réfractaires et plus particulièrement à la réparation par projection de zones altérées ou détruites de parois en matériaux réfractaires, dans des installations de production telles que des hauts fourneaux, fours à coke, fours de verrerie, tel que défini dans le préambule de la revendication 1.

Les brevets belges 757.466 et 871.496 concernent des procédés de fabrication de compositions réfractaires de ce genre.

Il s'est toutefois avéré que les propriétés de ces compositions ne répondaient pas toujours aux exigences demandées pour les différentes applications envisagées. C'est ainsi que la composition suivant ces deux brevets présente, dans le cas de la réparation à chaud, généralement des phénomènes de fissuration au voisinage de la surface réparée.

Un des buts essentiels de la présente invention est de proposer un mélange pour la préparation d'une composition réfractaire qui permet de remédier aux inconvénients des compositions obtenues suivant ces procédés connus, notamment par un choix judicieux de certains de ses constituants en fonction de l'application envisagée.

A cet effet, le mélange suivant l'invention contient :
a) pour former l'un ou plusieurs oxydes définis dans le préambule de la revendication 1, des métaux dont la granulométrie est comprise entre 10 et 30 microns et des peroxydes d'un diamètre moyen compris entre 2 et 20 microns;
b) une charge réfractaire, formant de 50 à 85 % en poids par rapport au poids total du mélange, dont le diamètre moyen est compris entre 200 et 800 microns et dont le grain est au maximum de 1 mm, la répartition granulométrique de la charge se rapprochant de plus sensiblement de celle prévue par la loi d'Andreasen.

Par oxyde mixte, il faut comprendre, dans le cadre de l'invention, un composé chimique cristallisé formé d'au moins deux oxydes de métaux différents.

Suivant une forme de réalisation préférentielle de l'invention, l'oxyde mixte est constitué de pseudowollastonite.

L'invention concerne également un procédé pour la préparation de la composition précitée. Ce procédé est caractérisé par le fait que l'on forme, dans un premier temps, par des réactions d'oxydation et/ou de décomposition du mélange précité, des oxydes réfractaires de métaux différents et dans des rapports tels à former, dans un deuxième temps, par une réaction entre au moins 50 % de ces oxydes réfractaires naissants, un ou plusieurs oxydes réfractaires mixtes thermodynamiquement stables dans les conditions de réaction, la nature et la quantité des composés chimiques réagissants étant choisies d'une manière telle que les réactions susdites soient exothermiques et conduisent à la formation de l'oxyde mixte à l'état fondu.

L'invention concerne enfin un procédé pour appliquer sur une paroi un revêtement formé par une composition réfractaire telle que définie ci-dessus qui est caractérisé par le fait que l'on projette la composition contre cette paroi en amenant cette composition à une température supérieure à celle de la température de fusion de l'oxyde mixte, mais inférieure à celle de la charge qu'elle contient.

D'autres détails et particularités de l'invention ressortiront de la description donnée ci-après, à titre d'exemple non limitatif, de quelques formes de réalisation particulières de la composition réfractaire suivant l'invention, du procédé de préparation de cette composition ainsi que du procédé d'utilisation de cette dernière.

La composition réfractaire obtenue par la mise en oeuvre du mélange de substances chimiques suivant l'invention contient une charge de particules réfractaires enveloppées dans une phase liante contenant au moins 20 % et de préférence plus de 50 %, d'un ou de plusieurs oxydes réfractaires mixtes d'au moins deux métaux différents. Cet oxyde mixte et la charge réfractaire sont choisis d'une manière telle que le point de fusion de la phase liante soit inférieur à celui de la charge.

La fraction pondérale de la charge par rapport à celle de la phase liante varie entre 50 et 85 %.

Suivant l'invention, il a été constaté que par un choix judicieux de la phase liante qui est généralement essentiellement constituée d'un ou plusieurs oxydes mixtes bien déterminés, il est possible d'obtenir une variété très étendue de compositions réfractaires permettant ainsi une grande diversité d'applications.

La charge réfractaire est généralement choisie parmi les oxydes réfractaires commerciaux tels que : SiO₂, Al₂O₃, ZrO₂, MgO, Cr₂O₃, TiO₂.

Dans certains cas, cette charge peut contenir des carbures et/ou nitrures de certains des métaux formant les oxydes réfractaires précités.

L'oxyde mixte pouvant être obtenu dans la composition réfractaire suivant l'invention est formé d'oxydes d'au moins deux des métaux suivants : Al, Si, Mg, Fe, Cr, Ca, Ba, Sr, Zr, Ti, Be, la combinaison des métaux étant choisie de manière telle que l'oxyde mixte formé soit thermodynamiquement stable et d'une réfractarité suffisante.

En fait, à partir des nombreux diagrammes binaires, ternaires, etc. existant dans la littérature scientifique, il est possible d'inventorier de nombreux oxydes réfractaires mixtes, binaires, ternaires, etc., thermodynamiquement stables à la température d'application souhaitée, résistant aux conditions thermiques, chimiques et mécaniques exigées pour les applications.

Ainsi, par un choix judicieux de la nature et du nombre d'oxydes réfractaires constituant la charge, une grande variété de nouvelles compositions réfractaires composites suivant l'invention peuvent être synthétisées.

La proportion et la granulométrie de la charge de même que sa nature conditionnent les propriétés des masses réfractaires obtenues, notamment en jouant le rôle d'absorbant calorifique,ce qui permet de réguler la cinétique des réactions chimiques.

Afin de remplir cette double fonction, cette charge répondra à une courbe granulométrique appropriée conduisant à la meilleure densité, courbe granulométrique se rapprochant au mieux de celle prévue par la loi bien connue d'Andreasen.

La charge réfractaire, dont le diamètre moyen est compris entre 200 et 800 µm et avec un grain maximum de 1 mm de diamètre, représente entre 50 et 85% du poids total de la composition.

Pour la préparation de la composition réfractaire suivant l'invention, on forme, dans un premier temps, in situ, des oxydes réfractaires par oxydation et/ou décomposition d'au moins deux substances chimiques de départ différentes, choisies d'une manière telle et dans des rapports tels à pouvoir former, dans un deuxième temps, par réaction entre les oxydes réfractaires naissants très réactifs, un oxyde réfractaire mixte thermodynamiquement stable dans les conditions de cette réaction.

La nature et la quantité des substances chimiques réagissantes sont telles que leur réaction d'oxydation et de synthèse soient exothermiques et conduisent à la fusion de l'oxyde mixte formé, constituant ainsi, après refroidissement et cristallisation, la phase liante de la composition réfractaire obtenue.

Ainsi, toute substance chimique conduisant après oxydation et/ou décomposition à la formation d'un oxyde réfractaire peut être utilisée pour la synthèse de l'oxyde mixte réfractaire.

Suivant le cas d'application, on utilise soit un des métaux suivants : aluminium, silicium, magnésium, fer, chrome, etc., soit des peroxydes métalliques, tels que CaO₂, MgO₂, BaO₂, SrO₂, etc. soit un sel métallique, tel que AlCl₃, SiCl₄, etc.

La granulométrie des substances destinées à former les oxydes mixtes de la composition réfractaire suivant l'invention a une grande influence sur les propriétés de celle-ci.

Ces substances présentent un diamètre moyen compris entre 2 et 20 µm pour les peroxydes et sels métalliques et entre 10 et 30 µm pour les particules métalliques.

Dans certains cas particuliers, les substances pour former dans un premier temps le ou les oxydes réfractaires peuvent être constituées par un ou plusieurs composés métalliques à l'état liquide ou gazeux.

Par ailleurs, la répartition massique des poudres utilisées pour la formation de la composition réfractaire suivant l'invention doit être telle qu'elle favorise la formation de l'oxyde mixte souhaité. L'expérience a montré que le rapport massique des oxydes naissants dès les premières réactions de décomposition et/ou d'oxydation doit de préférence être compris entre 0,5 et 2 fois le rapport stoechiométrique de l'oxyde mixte à synthétiser. La température de réaction est avantageusement maintenue, au cours de la formation des oxydes réfractaires, de 50 à 200°C supérieure à la température de fusion de l'oxyde mixte à synthétiser.

La maîtrise de la température de réaction dépendant du bilan énergétique global des réactions successives pourra être obtenue par le choix d'un rapport judicieux entre les substances réagissantes et la charge. Ce rapport peut varier énormément en fonction de la nature, de la répartition granulométrique de la charge et des conditions thermiques environnantes en fonction de l'application et des conditions de mise en oeuvre du procédé; un même composé peut ainsi être synthétisé dans des conditions particulières ou à température élevée respectivement pour la fabrication de pièces de forme ou pour la réparation de structures en fonctionnement, et donc de parois de fours à température relativement élevée.

De même, une source de chaleur additionnelle peut être utilisée non seulement pour l'amorçage de la réaction, mais également pour le maintien de la température dans la zone réactionnelle, permettant ainsi de réaliser des dépôts sur des substrats à basse température.

Les caractéristiques de la masse réfractaire composite ainsi réalisée sont influencées en ce qui concerne, d'une part, la tenue thermique, à savoir la température d'affaissement sous charge, le fluage à chaud, etc., et, d'autre part, les autres caractéristiques physiques, telles que la densité apparente, l'écrasement à froid, la porosité, le coefficient d'érosion, etc., par le ou les oxydes mixtes de la phase liante mais également par la nature de la charge et sa répartition granulométrique ainsi que par la technique de fabrication utilisée qui peut être le moulage, le dépôt ou la projection, par exemple.

Ci-après, sont donnés quelques exemples concrets de réalisation de l'invention qui permettront de faire apparaître plus clairement le principe de l'invention en même temps que d'autres particularités et caractéristiques supplémentaires de celle-ci.

Dans une première série d'exemples, le ou les oxydes mixtes de la phase liante de la composition réfractaire obtenue suivant l'invention sont formés par du CaO et du SiO₂.

D'après le diagramme CaO-SiO₂, quatre oxydes mixtes sont thermodynamiquement stables. L'un d'entre eux, la pseudowollastonite CaO.SiO₂ - (température de fusion 1.544°C) est particulièrement intéressant.
Ainsi, la synthèse de celui-ci peut intéresser les domaines d'applications des briques de silice utilisées à une température inférieure à 1.500°C par exemple pour la fabrication de pièces de forme (domaine de la tréfilerie) ou pour des réparations à chaud (fours à coke, chambres de four à verre).

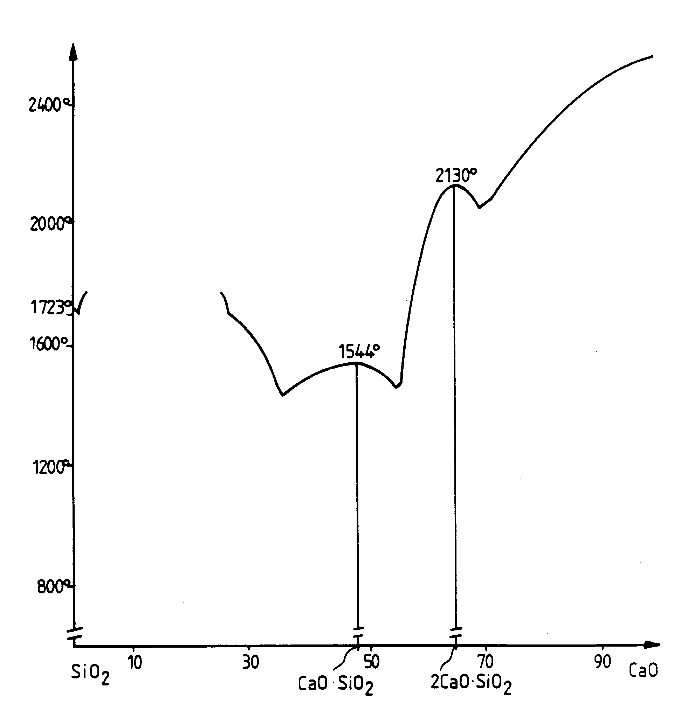

La figure annexée montre un diagramme de phase CaO-SiO₂ simplifié de Bert Philips et Arnolf Muan J. Am. Ceram. Soc., 42 [9] 414 (1959), dans lequel uniquement la pseudowollastonite et le silicate bicalcique ont été repris.

### Exemple 1

### Système CaO-SiO₂

| Composition du mélange. | | |
|---|---|---|
| | Poids (%) | Diamètre moyen µm |
| Si | 13 | 20 |
| CaO₂ | 12 | 10 |
| SiO₂ | 75 | 300 |
| (Tridymite + Cristobalite) | | |

Dans la composition réfractaire, obtenue à partir du mélange des substances chimiques, suivant cet exemple, l'oxyde mixte de la phase liante est essentiellement constitué par de la pseudowollastonite, étant donné la stoechiométrie choisie, tandis que la charge était formée de SiO₂. Pour satisfaire cette stoechiométrie, l'oxygène chimiquement combiné dans la structure de l'oxyde mixte est apporté, d'une part, par la décomposition du peroxyde et, d'autre part, par le gaz porteur utilisé lors de la projection.

L'apport calorifique pour la synthèse, au départ de l'état fondu, de cet oxyde mixte est réalisé par l'oxydation du silicium et la décomposition du peroxyde de calcium.

Le mélange précité a été projeté sur des briques de silice. Il a été constaté que pour obtenir un dépôt cohérent, la température atteinte par la composition doit être de préférence supérieure à la température de fusion de l'oxyde mixte visé. On obtient ainsi un dépôt exempt de fissuration au voisinage de la zone d'accrochage.

### Exemple 2

### Système CaO-Al₂O₃

| Composition du mélange. | | |
|---|---|---|
| | Poids (%) | Diamètre moyen (µm) |
| Al | 10,8 | 20 |
| CaO₂ | 14,4 | 6 |
| Al₂O₃ | 74,8 | 400 |

La phase liante est constituée, dans cet exemple, de CaO.Al₂O₃ dont la température de fusion est de 1600 °C et la charge de Al₂O₃.

### Exemple 3

### Système MgO-Al₂O₃

| Composition du mélange. | | |
|---|---|---|
| | Poids(%) | Diamètre moyen (µm) |
| MgO₂ | 11,9 | 20 |
| Al | 12,7 | 20 |
| Al₂O₃ | 75 | 400 |

Dans cet exemple, la phase liante est principalement constituée de spinelle MgO.Al₂O₃ et la charge de Al₂O₃.

### Exemple 4

### Système BaO-Al₂O₃

| Composition du mélange. | | |
|---|---|---|
| | Poids (%) | Diamètre moyen (µm) |
| BaO₂ | 26 | 15 |
| Al | 8 | 20 |
| Al₂O₃ | 66 | 400 |

Dans ce dernier exemple, la phase liante est principalement constituée d'aluminate de barium BaO.Al₂O₃ et la charge de Al₂O₃.

Comme il résulte déjà de certaines considérations développées ci-dessus, la composition réfractaire suivant l'invention et obtenue par le procédé décrit ci-dessus, peut être utilisée pour des applications extrêmement diverses.

Il est possible d'appliquer sur une paroi réfractaire un revêtement formé par cette composition dans le but d'améliorer certaines propriétés de la surface de cette paroi.

Dans ces exemples, la charge peut être très variée. C'est ainsi que l'Al₂O₃ et/ou le SiO₂ peut être remplacé et/ou complèté par du ZrO₂, MgO, Cr₂O₃, TiO₂.

Ainsi, cette composition réfractaire pourrait être formée en vue d'améliorer la résistance thermique, la résistance à l'usure mécanique ou à l'érosion chimique. Le mélange de substances, chimiques pour la formation de cette composition réfractaire pourrait par exemple être projetée contre cette paroi en l'amenant à use température supérieure à celle de la température de fusion de l'oxyde mixte mais inférieure à celle de la charge qu'elle contient.

Avantageusement, au moins une partie des calories nécessaires pour amener le mélange suivant l'invention à la température de fusion précitée avant qu'il atteigne la paroi est apportée en formant in situ les oxydes réfractaires devant constituer l'oxyde mixte comme phase liante dans la composition obtenue.

Cet oxyde mixte peut d'ailleurs avantageusement également être formé in situ lors de la projection du mélange des substances chimiques précitées sur la paroi précitée.

Un des grands avantages de la composition suivant l'invention est que, dans le cas de la réparation de briques de silice, elle permet d'éviter le problème de fissuration conduisant à l'écaillage des briques. En effet, grâce à un choix judicieux de l'oxyde mixte de la phase liante, il est possible de former selon l'invention une composition réfractaire qui peut s'accrocher aux briques de silice sans endommager leur structure.

Le mélange précité suivant l'invention peut également être utilisée pour former, sur la surface d'un matériau réfractaire de base, une couche réfractaire d'épaisseur variable présentant des propriétés particulières augmentant la qualité de surface du matériau réfractaire de base. Cet accrochage peut être effectué avant la pose du matériau réfractaire de base ou après la mise en place de celui-ci.

La composition suivant l'invention peut également être utilisée en masse, par exemple sous forme de briques ou sous forme de pièces spéciales destinées à être montées en des endroits critiques dans des fours de traitement thermique par exemple.

Il est bien entendu que l'invention n'est pas limitée aux formes de réalisation décrites ci-dessus relatives à la composition réfractaire suivant l'invention, à son procédé de fabrication et d'utilisation, et au mélange des substances chimiques pour former cette composition, mais que bien des variantes peuvent être envisagées sans sortir du cadre de la présente invention.

C'est ainsi que, dans certains cas, la teneur de la charge pourra être réduite à des traces dans cette composition et que le procédé s'étend donc également à la préparation de l'oxyde mixte seul, qui, pour des applications déterminées, pourra être utilisé tel quel.

## Revendications

1. Mélange de substances chimiques destiné à la formation d'une composition réfractaire comprenant une charge de particules réfractaires noyées dans une phase liante présentant un point de fusion inférieur à celui de cette charge et contenant au moins 20% et de préférence plus de 50 % d'un ou plusieurs oxydes réfractaires mixtes d'au moins deux métaux différents, ce mélange étant caractérisé en ce qu'il contient :
a) pour former l'un ou plusieurs oxydes susdits, des métaux dont la granulométrie est comprise entre 10 et 30 microns et des peroxydes d'un diamètre moyen compris entre 2 et 20 microns ;
b) une charge réfractaire, formant de 50 à 85% en poids par rapport au poids total du mélange, dont le diamètre moyen est compris entre 200 et 800 microns et dont le grain est au maximum de 1 mm, la répartition granulométrique de la charge se rapprochant de plus sensiblement de celle prévue par la loi d'Andreasen.

2. Mélange suivant la revendication 1, caractérisé en ce qu'il contient au moins deux des métaux suivants : Al, Si, Mg, Fe, Cr, Ca, Ba, Sr, Zr, Ti, Be.

3. Mélange suivant l'une ou l'autre des revendications 1 et 2, caractérisé en ce que la charge précitée comprend au moins un des oxydes, carbures et/ou nitrures des métaux suivants : Si, Al, Zr, Ca, Mg, Ti, Cr.

4. Mélange suivant l'une quelconque des revendications 1 à 3, caractérisé en ce qu'il contient au moins un des peroxydes métalliques suivants : CaO₂, MgO₂, BaO₂, SrO₂ et/ou au moins un des composés métalliques suivants : AlCl₃, SiCl₄.

5. Mélange suivant l'une quelconque des revendications 1 à 4, caractérisé en ce qu'il contient de la silice, notamment de la cristobalite et/ou de la tridymite et/ou de l'alumine et/ou de l'oxyde de zirconium, comme charge.

6. Mélange suivant la revendication 5, caractérisé en ce que la charge comprend au moins un des oxydes de l'oxyde mixte à constituer.

7. Mélange suivant l'une quelconque des revendications 1 à 6, caractérisé en ce que les quantités et la nature des métaux, peroxydes et/ou composés métalliques, ces derniers étant choisis parmi le chlorure d'aluminium et le chlorure de silicium, et étant destinés à être mis en réaction pour la formation d'un ou plusieurs oxydes réfractaires sont telles que le rapport massique des oxydes naissants résultant de cette réaction est compris entre 0,5 et 2 fois le rapport stoechiométrique des oxydes constituant l'oxyde mixte à former.

8. Procédé de préparation d'une composition par la mise en oeuvre du mélange réfractaire suivant l'une quelconque des revendications 1 à 7, caractérisé en ce l'on forme, dans un premier temps, par des réactions d'oxydation et/ou de décomposition du mélange précité, des oxydes réfractaires d'au moins deux métaux différents et dans des rapports tels à former, dans un deuxième temps, par réaction entre au moins 50 % de ces oxydes réfractaires naissants provenant de ces réactions, un oxyde réfractaire mixte thermodynamiquement stable dans les conditions de ces réactions, la nature et la quantité des composés du mélange susdit étant choisies d'une manière telle que les réactions susdites soient suffisamment exothermiques pour conduire à la formation de l'oxyde mixte à l'état fondu.

9. Procédé suivant la revendication 8, caractérisé en ce que l'on utilise, pour former les oxydes réfractaires dans le premier temps, un ou plusieurs composés métalliques à l'état liquide et/ou gazeux.

10. Procédé suivant l'une ou l'autre des revendications 8 et 9, caractérisé en ce que l'on règle les quantités et la nature des métaux, peroxydes et/ou composés métalliques mis en réaction pour la formation des oxydes réfractaires dans le premier temps pour que le rapport massique des oxydes naissants soit compris entre 0,5 et 2 fois le rapport stoechiométrique des oxydes constituant l'oxyde mixte à former dans le deuxième temps.

11. Procédé suivant l'une quelconque des revendications 8 à 10, caractérisé en ce que l'on maintient la température, au cours de la formation des oxydes réfractaires précités, de 50 à 200°C supérieure à la température de fusion de l'oxyde mixte à former.

12. Procédé suivant l'une quelconque des revendications 8 à 11, caractérisé en ce que l'on règle la température au cours de la formation des oxydes réfractaires en ajustant la quantité et la granulométrie du ou des oxydes réfractaires introduits comme charge.

13. Procédé suivant l'une quelconque des revendications 8 à 12, caractérisé en ce que l'on amorce les réactions pour la formation des oxydes réfractaires au moyen d'une source de chaleur extérieure et en ce que l'on règle la température de ces réactions en tenant compte de la température initiale du système.

14. Procédé suivant l'une quelconque des revendications 8 à 13, caractérisé en ce que l'on règle les quantités et la nature des métaux, peroxydes et/ou composés métalliques mis en réaction de manière à former une composition contenant un oxyde mixte constitué de diopside, d'akermanite, de monticellite et/ou de merwinite.

15. Procédé suivant l'une quelconque des revendications 8 à 13, caractérisé en ce que l'on règle les quantités et la nature des métaux, peroxydes et/ou composés métalliques mis en réaction de manière à former une composition contenant un oxyde mixte constitué de 12CaO.7Al₂O₃, CaO.Al₂O₃ et/ou CaO.2Al₂O₃.

16. Procédé suivant l'une quelconque des revendications 8 à 13, caractérisé en ce que l'on règle les quantités et la nature des métaux, peroxydes et/ou composés métalliques mis en réaction de manière à former une composition contenant un oxyde mixte constitué de BaO.SiO₂ et/ou BaO.Al₂O₃.

17. Procédé pour appliquer le mélange de substances chimiques suivant l'une quelconque des revendications 1 à 7 sur une paroi de manière à former un revêtement réfractaire, caractérisé en ce que l'on projette un mélange de ces substances chimiques contre cette paroi en amenant ce mélange et la composition réfractaire qui en résulte à une température supérieure à celle de la température de fusion de l'oxyde mixte, mais inférieure à celle de la charge qu'elle contient.

18. Procédé suivant la revendication 17, caractérisé en ce que l'on utilise un gaz porteur pour la projection du mélange précité contenant au moins 21 % d'oxygène et de préférence au moins 50 % d'oxygène.

19. Procédé suivant la revendication 17 ou 18, caractérisé en ce que l'on apporte au moins une partie des calories nécessaires pour amener ce mélange à la température précitée avant qu'il atteigne la paroi en formant in situ les oxydes réfractaires devant constituer l'oxyde mixte précité dans ladite composition.

20. Procédé suivant l'une quelconque des revendications 17 à 19, caractérisé en ce que l'on forme l'oxyde mixte in situ lors de la projection sur la paroi précitée.

## Claims

1. Mixture of chemical substances destined to form a refractory composition consisting of a charge of refractory particles immersed in a binding phase with a melting point lower than that of said charge and containing at least 20% and preferably more than 50% of one or more refractory oxides mixed with at least two different metals, characterised in that said mixture comprises:
a) to form the above-mentioned one or more oxides, metals whose grain size is between 10 and 30 microns, and peroxides with an average diameter between 2 and 20 microns;
b) a refractory charge, forming between 50% and 85% by weight with respect to the total weight of the mixture, with an average diameter between 200 and 800 microns and with maximum grain 1 mm, whose grain size distribution comes moreover sensibly close to Andreasen's law.

2. Mixture according to claim 1, characterised in that it contains at least two of the following metals: Al, Si, Mg, Fe, Cr, Ca, Ba, Sr, Zr, Ti, Be.

3. Mixture according to either of claims 1 or 2, characterised in that the above-mentioned charge comprises at least oxides, carbides and/or nitrides of the following metals: Si, Al, Zr, Ca, Mg, Ti, Cr.

4. Mixture according to any of claims 1 to 3, characterised in that it contains at least one of the following metal peroxides: CaO₂, MgO₂, BaO₂, SrO₂ and/or at least one of the following metal compounds: AlCl₃, SiCl₄.

5. Mixture according to any of claims 1 to 4, characterised in that it contains silica, in particular cristobalite and/or tridymite, and/or aluminium and/or zirconium oxide as the charge.

6. Mixture according to claim 5, characterised in that the charge consists of at least one of the oxides of the mixed oxides to be constituted.

7. Mixture according to any of claims 1 to 6, characterised in that the quantities and nature of the metals, peroxides and/or metal compounds, where said contents are chosen from aluminium chloride or silicon chloride and are destined for reacting to form one or more refractory oxides, are such that the mass ratio of the oxides resulting from this reaction is between 0.5 and 2 times the stoichiometric ratio of the oxides constituting the mixed oxide to be formed.

8. Process for preparing a composition using the refractory mixture according to any of claims 1 to 7, characterised in that it is formed firstly by oxidation and/or decomposition reactions of the above-mentioned mixture, and secondly by a reaction between at least 50% of said refractory oxides produced by these reactions, involving the refractory oxides of at least two different metals in the ratios necessary to form a mixed, refractory, thermodynamically stable oxide under the conditions of these reactions, the nature and the quantity of the compounds of the mixture being chosen in such a manner that the above-mentioned reactions are sufficiently exothermic to lead to formation of the mixed oxide in the molten state.

9. Process according to claim 8, characterised in that to form the refractory oxides in the first stage, one or more metal compounds in the liquid and/or gaseous state are used.

10. Process according to either of claims 8 or 9, characterised in that the quantities and nature of the metals, peroxides and/or metal compounds reacted to form the refractory oxides in the first stage are adjusted so that the mass ratio of the oxides produced is between 0.5 and 2 times the stoichiometric ratio of the oxides constituting the mixed oxide to be formed in the second stage.

11. Process according to any of claims 8 to 10, characterised in that the temperature during formation of the above-mentioned refractory oxides is kept between 50° and 200°C higher than the melting temperature of the mixed oxide to be formed.

12. Process according to any of claims 8 to 11, characterised in that the temperature during formation of the refractory oxides is regulated, by adjusting the quantity and grain size of the refractory oxides introduced as the load.

13. Process according to any of claims 8 to 12, characterised in that the reactions for forming the refractory oxides are initiated by an external source of heat, and in that the temperature of these reactions is regulated taking into account the initial temperature of the system.

14. Process according to any of claims 8 to 13, characterised in that the quantities and nature of the metals, peroxides and/or metal compounds reacted are adjusted so as to form a composition containing a mixed oxide composed of diopside, akermanite, monticellite and/or merwinite.

15. Process according to any of claims 8 to 13, characterised in that the quantities and nature of the metals, peroxides and/or metal compounds reacted are adjusted to form a composition containing a mixed oxide made up of 12CaO.7Al₂O₃, CaO.Al₂O₃ and/or CaO.2Al₂O₃.

16. Process according to any of claims 8 to 13, characterised in that the quantities and nature of the metals, peroxides and/or metal compounds reacted are adjusted to form a composition containing a mixed oxide made up of BaO.SiO₂ and/or BaO.Al₂O₃.

17. Process for applying the mixture of chemical substances according to any of claims 1 to 7 to a wall, so as to form a refractory coating, characterised in that a mixture of these chemical substances is projected against the wall while bringing this mixture and the refractory composition resulting from it to a temperature higher than the melting point of the mixed oxide but lower than that of the charge which it contains.

18. Process according to claim 17, characterised in that a carrier gas is used to project the above-mentioned mixture, containing at least 21% oxygen and preferably at least 50% oxygen.

19. Process according to either of claims 17 or 18, characterised in that at least part of the calories are provided, necessary for bringing this mixture to the above-mentioned temperature before it reaches the wall, forming in situ the refractory oxides which are to constitute the above-mentioned mixed oxide in said composition.

20. Process according to any of claims 17 to 19, characterised in that the oxide is formed in situ during projection onto the above-mentioned wall.

## Patentansprüche

1. Mischung von chemischen Stoffen zur Herstellung einer Feuerfestverbindung, bestehend aus einer Füllung aus Feuerfestpartikeln, die in eine Bindephase mit einem Schmelzpunkt, der niedriger ist als der Schmelzpunkt dieser Füllung, eingetaucht wurde und die mindestens 20%, jedoch vorzugsweise über 50% eines oder mehrerer aus mindestens zwei verschiedenen Metallen bestehenden, gemischten Feuerfestoxide enthält, wobei diese Mischung dadurch gekennzeichnet ist, daß sie folgendes enthält:
a) zwecks Bildung eines oder mehrerer der genannten Oxide, Metalle mit einer Korngröße zwischen 10 und 30 Mikron und Peroxide mit einem mittleren Durchmesser zwischen 2 und 20 Mikron;
b) eine Feuerfestfüllung mit einem Gewichtsanteil von 50 bis 85% des Gesamtgewichts der Mischung, deren mittlerer Durchmesser zwischen 200 und 800 Mikron liegt und deren Korn höchstens 1 mm groß ist, wobei sich die Korngrößenverteilung der Füllung darüber hinaus wesentlich der im Andreasen-Gesetz vorgesehenen Verteilung nähert.

2. Mischung gemäß Anspruch 1, gekennzeichnet dadurch, daß sie mindestens zwei der folgenden Metalle enthält: Al, Si, Mg, Fe, Cr, Ca, Ba, Sr, Zr, Ti, Be.

3. Mischung gemäß Anspruch 1 oder 2, gekennzeichnet dadurch, daß die genannte Füllung mindestens eines der Oxide, Kohlenstoffe und/oder Nitride folgender Metalle enthält: Si, Al, Zr, Ca, Mg, Ti, Cr.

4. Mischung gemäß einem der Ansprüche 1 bis 3, gekennzeichnet dadurch, daß sie mindestens eines der folgenden Metallperoxide enthält: CaO₂, MgO₂, BaO₂, SrO₂ und/oder mindestens eine der folgenden Metallverbindungen: AlCl₃, SiCl₄.

5. Mischung gemäß einem der Ansprüche 1 bis 4, gekennzeichnet dadurch, daß sie Kieselerde, insbesondere Cristobalit und/oder Tridymit und/oder Tonerde und/oder Zirkonoxid als Füllung enthält.

6. Mischung gemäß Anspruch 5, gekennzeichnet dadurch, daß die Füllung mindestens eines der zu bildenden Oxide des gemischten Oxids enthält.

7. Mischung gemäß einem der Ansprüche 1 bis 6, gekennzeichnet dadurch, daß die Mengen und die Art der Metalle, Peroxide und/oder Metallverbindungen - in Frage kommen Aluminiumchlorid und Siliziumchlorid, wobei diese Stoffe dazu bestimmt sind, zwecks Bildung eines oder mehrerer Feuerfestoxide zur Reaktion miteinander gebracht zu werden - so geartet sind, daß das Masseverhältnis der aus dieser Reaktion entstehenden Oxide zwischen 0,5 und 2 Mal so groß ist wie das stöchiometrische Verhältnis der Oxide, aus denen das zu bildende gemischte Oxid besteht.

8. Verfahren für die Zubereitung einer Verbindung durch Verarbeitung der Feuerfestmischung gemäß einem der Ansprüche 1 bis 7, gekennzeichnet dadurch, daß in einer ersten Phase durch Oxidations- und/oder Zerfallsreaktionen der genannten Mischung aus mindestens zwei verschiedenen Metallen bestehende Feuerfestoxide gebildet werden, und zwar in solchen Verhältnissen, daß in einer zweiten Phase durch Reaktion zwischen mindestens 50% dieser aus diesen Reaktionen hervorgehenden Feuerfestoxiden ein thermodynamisch stabiles gemischtes Feuerfestoxid unter den Bedingungen dieser Reaktionen entsteht, wobei die Art und die Menge der Bestandteile der genannten Mischung so gewählt werden, daß die genannten Reaktionen ausreichend exotherm sind, um zur Bildung des gemischten Oxids in geschmolzenem Zustand zu führen.

9. Verfahren gemäß Anspruch 8, gekennzeichnet dadurch, daß zur Bildung der Feuerfestoxide in der ersten Phase eine oder mehrere Metallverbindungen in flüssigem oder gasförmigem Zustand verwendet werden.

10. Verfahren gemäß einem der Ansprüche 8 bis 9, gekennzeichnet dadurch, daß die Mengen und die Art der Metalle, Peroxide und/oder Metallverbindungen, die miteinander zwecks Bildung der Feuerfestoxide in der ersten Phase zur Reaktion gebracht werden, so eingestellt werden, daß das Masseverhältnis der entstehenden Oxide zwischen 0,5 und 2 Mal so groß ist wie das stöchiometrische Verhältnis der Oxide, aus denen das in der zweiten Phase zu bildende gemischte Oxid besteht.

11. Verfahren gemäß einem der Ansprüche 8 bis 10, gekennzeichnet dadurch, daß die Temperatur während der Bildung der genannten Feuerfestoxide zwischen 50 und 200°C über der Schmelztemperatur des zu bildenden gemischten Oxids gehalten wird.

12. Verfahren gemäß einem der Ansprüche 8 bis 11, gekennzeichnet dadurch, daß man die Temperatur während der Bildung der Feuerfestoxide einstellt indem man die Menge und die Korngröße des oder der als Füllung beigegebenen Oxide entsprechend anpaßt.

13. Verfahren gemäß einem der Ansprüche 8 bis 12, gekennzeichnet dadurch, daß man die Reaktionen zur Bildung der Feuerfestoxide mit Hilfe einer externen Wärmequelle in Gang setzt und daß man die Temperatur dieser Reaktionen unter Berücksichtigung der Initialtemperatur des Systems einstellt.

14. Verfahren gemäß einem der Ansprüche 8 bis 13, gekennzeichnet dadurch, daß man die Mengen und die Art der zur Reaktion gebrachten Metalle, Peroxide und/oder Metallverbindungen so einstellt, daß eine Verbindung entsteht, die ein aus Diopsid, Akermanit, Monticellit und/oder Merwenit bestehendes gemischtes Oxid enthält.

15. Verfahren gemäß einem der Ansprüche 8 bis 13, gekennzeichnet dadurch, daß man die Mengen und die Art der zur Reaktion gebrachten Metalle, Peroxide und/oder Metallverbindungen so einstellt, daß eine Verbindung entsteht, die ein aus 12CaO.7Al₂O₃, CaO.Al₂O₃ und/oder CaO.2Al₂O₃ bestehendes gemischtes Oxid enthält.

16. Verfahren gemäß einem der Ansprüche 8 bis 13, gekennzeichnet dadurch, daß man die Mengen und die Art der zur Reaktion gebrachten Metalle, Peroxide und/oder Metallverbindungen so einstellt, daß eine Verbindung entsteht, die ein aus BaO.SiO₂ und/oder BaO.Al₂O₃ bestehendes gemischtes Oxid enthält.

17. Verfahren zum Auftrag der Mischung chemischer Stoffe gemäß einem der Ansprüche 1 bis 7 auf eine Wand, um eine Feuerfestbeschichtung zu bilden, gekennzeichnet dadurch, daß man eine Mischung dieser chemischen Stoffe auf diese Wand spritzt und diese Mischung und die dabei entstehende Feuerfestverbindung auf eine Temperatur bringt, die über der Schmelztemperatur des gemischten Oxids, jedoch unter der Temperatur der in der Mischung enthaltenen Füllung liegt.

18. Verfahren gemäß Anspruch 17, gekennzeichnet dadurch, daß man ein Trägergas für das Aufspritzen der genannten Mischung verwendet, das mindestens 21%, vorzugsweise jedoch mindestens 50% Sauerstoff enthält.

19. Verfahren gemäß Anspruch 17 oder 18, gekennzeichnet dadurch, daß man mindestens einen Teil der Kalorien zuführt, die erforderlich sind, um diese Mischung auf die genannte Temperatur zu bringen, bevor sie die Wand erreicht, und zwar durch Bildung vor Ort der Feuerfestoxide, aus denen sich das genannte gemischte Oxid in dieser Verbindung zusammensetzen soll.

20. Verfahren gemäß einem der Ansprüche 17 bis 19, gekennzeichnet dadurch, daß man das gemischte Oxid vor Ort während des Aufspritzens auf die genannte Wand bildet.
